Europäisches Patentamt

European Patent Office

Office européen des brevets

(11) Publication number: **0 159 193**
**B1**

(12) **EUROPEAN PATENT SPECIFICATION**

(45) Date of publication of patent specification: **24.10.90**

(21) Application number: **85302694.6**

(22) Date of filing: **17.04.85**

(51) Int. Cl.⁵: **A 01 C 5/00**

(54) **Planting apparatus.**

(30) Priority: **19.12.84 GB 8432046**
**17.04.84 GB 8409940**

(43) Date of publication of application:
**23.10.85 Bulletin 85/43**

(45) Publication of the grant of the patent:
**24.10.90 Bulletin 90/43**

(84) Designated Contracting States:
**AT BE CH DE FR GB IT LI LU NL SE**

(56) References cited:
**DE-A-2 424 011**
**DE-C- 480 386**
**DE-C- 491 912**
**FR-A- 634 451**
**GB-A- 205 825**
**US-A-1 475 061**
**US-A-3 872 805**

(73) Proprietor: **Specialised Harvesting Services**
**Limited**
**'This L Do' Coneygarth Lane**
**Doncaster Lincolnshire (GB)**

(72) Inventor: **Windle, Anthony B.**
**'This L Do' Coneygarth Lane Haxey**
**Doncaster DN9 2LH West Yorkshire (GB)**

(74) Representative: **Wharton, Peter Robert et al**
**P.R. Wharton & Co. Beckett's Bank Chambers 19**
**Cheapside**
**Bradford West Yorkshire BD1 4HR (GB)**

Courier Press, Leamington Spa, England.

## Description

This invention relates to planting apparatus and in particular to apparatus for depositing seedlings in a furrow and closing the soil of the furrow over the roots thereof.

Many crops are started in nurseries under controlled conditions and are then transplanted as seedlings into fields where the plants reach maturity for cropping. With such crops grown on a commercial scale it is necessary to transplant large numbers of such seedlings in a short period of time if the growth cycle is not to be interrupted.

Various forms of planting apparatus are available which can perform this operation but most suffer from the drawbacks that they are complicated, and therefore expensive, and many will only cope with one particular type of seedling.

The invention seeks to provide a simple and inexpensive planting apparatus which is versatile in application.

US-A-1475061 discloses a planting apparatus which comprises a frame including a pair of inclined rear wheels and a furrow-opening plough, the apparatus being adapted to be lowered such that the plough opens a furrow and the wheels there after close it, the frame carrying a plurality of turrets adapted to contain seedlings arranged on a rotatable carousel over a chute.

According to the invention a planting apparatus is characterised in that the chute is arranged for reciprocation from within the trailing portion of the plough to a position close to the inclined wheels and the turrets are arranged to open in timed relationship with the movement of the chute to deposit a seedling into the chute when the latter is at or close to its most advanced position.

The reciprocation of the chute pushes a seedling placed therein into the furrow formed by the plough and supports it in the furrow while the inclined rear wheels close the furrow over the roots thereof. The chute then retracts to is seedling receiving position to receive the next successive seedling and the operation is repeated. The rotation of the carousel is timed so that each successive turret moves over the chute and opens to allow the seedling to fall into the chute when the chute is at its most advanced position within the trailing portion of the furrow-opening plough. The chute is preferably driven from a common gearbox with the turrets so as to ensure the correct timed relationship. Each turret is preferably arranged to open by having a hinged bottom portion which is supported on one or more frame members while the carousel is rotated, except in the area over the chute at which position the hinged bottom falls open allowing the seedling to be deposited into the chute.

This invention also seeks to provide an improved form of chute for use with the above planter which provides adequate support for the seedling before the latter is pushed into the furrow and yet does not foul the foliage thereof.

In accordance with a preferred embodiment of the present invention there is provided a planting apparatus which comprises a frame including a pair of inclined rear wheels and a furrow-opening plough, the apparatus being adapted to be towed such that the plough opens a furrow and the wheels thereafter close it, the frame carrying means for successively supplying seedlings to a chute communicating with the trailing portion of the furrow-opening plough, the chute being arranged for reciprocation from within the trailing portion of the plough to a position close to the inclined wheels and having a lid biased towards a closed position when the chute is at its most advanced position and arranged to open in timed relationship with the movement of the chute so as to clear the foliage of a seedling when the chute is at or close to its most rearward position at which the seedling is deposited into the furrow.

The chute will generally be enclosed on three sides and be open on the fourth side facing rearwardly towards the inclined wheels. The lid is preferably pivotally attached toward the upper portion of the chute so as to cover the rearwardly facing open face of the chute when the latter is in its most retracted position (that is within the trailing portion of the plough). This is the point at which a seedling will be dropped into the chute from the means supplying seedlings, for example a series of turrets on a carousel as described hereinafter. As the chute reciprocates rearwardly toward the position close to the inclined wheels the lid is pivoted open by means of, for example, an actuating rod coming into contact with a bar fixed to the frame. The degree to which the lid is opened may be adjusted by adjusting the position of the bar affixed to the frame.

It is preferred that the drive for the chute (and for the means for supplying seedlings to the chute) is independent of the wheels of the apparatus so as not to act as a drag thereon, and will preferably be supplied from a suitable power take-off, for example of the towing vehicle. This also has the added advantage that by adjusting the rate of drive supplied, the planting rate can be altered independently of the speed of towing.

By simply replacing the reciprocating chute with one of a different configuration, the apparatus of the invention can simply be adapted for use for different types of seedling and is therefore extremely versatile as well as being simple in construction and economical to produce.

The invention will be described further, by way of example, with reference to the accompanying drawings in which:

Figure 1 is a partial diagrammatic elevational view of an apparatus constructed in accordance with the invention;

Figure 2A is a detail view of the carousel drive arrangement;

Figure 2B illustrates the opening of the turrets;

Figure 3 illustrates the chute from one side; and

Figure 4 illustrates the chute from the other side.

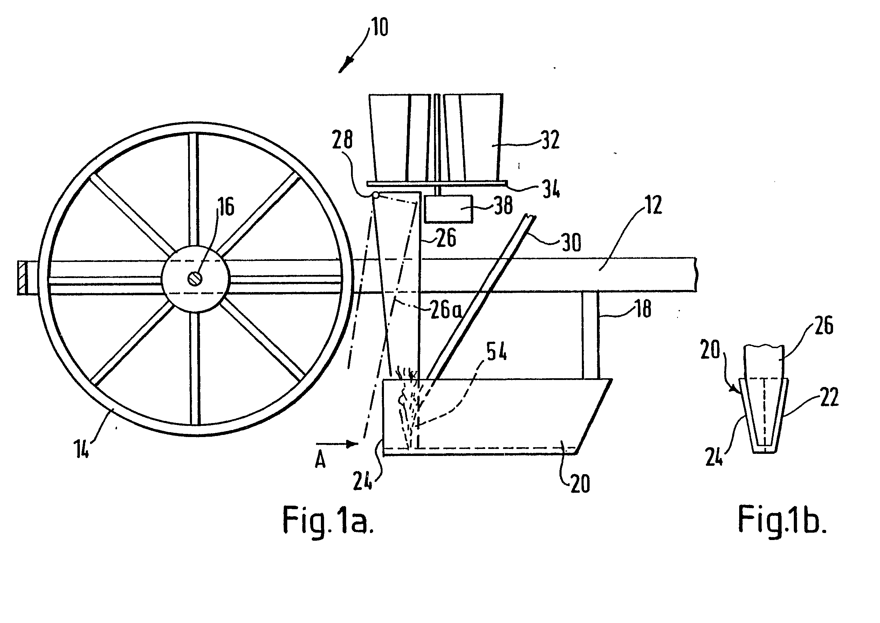

Referring to the drawings, planting apparatus generally designated 10 comprises a main frame 12 having a pair of mutually inwardly inclined rear wheels 14 attached thereto by means of an axle 16. Depending from the frame 12 by means of a suitable support member 18 is a furrow opening plough 20 (shown in Figure 1b as viewed in the direction of arrow A in Figure 1a) which comprises two side walls 22 as joined at the leading edge to resemble the bow of a ship. The plough 20 is open at its trailing portion 24.

Within the trailing portion 24 of the plough 20 is positioned a chute 26 which is pivotally attached to the apparatus at 28 and may be reciprocated by means of a connecting rod 30, as hereinafter will be described, from the position shown at 26 in Figure 1 to the position shown at 26a. A number of plant receiving turrets 32, in this case four, are arranged on a carousel 34 which is rotated by an axle 36 of an angle gear box 38. The gear box 38 is driven via a shaft connected to its input shaft 40, for example from the power take-off of the towing tractor. The gear box 38 is provided with an external drive gear 42 which in turn drives a gear 44 having an eccentric 46 mounted thereon and thereby imparting a reciprocal drive to the connecting rod 30. The ratio between the gears 42 and 44 will depend on the number of turrets on the carousel. In the present case there being four turrets 32, the ratio of the gear 42 to that of the gear 44 is 4:1 so that the rod 30 completes four cycles for every revolution of the carousel 34.

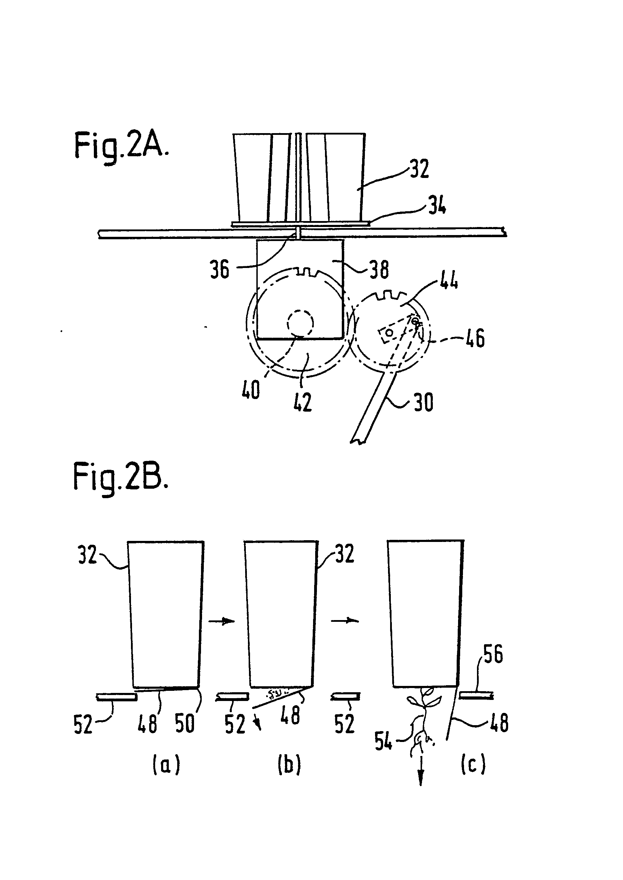

Figure 2B illustrates a turret 32 as it revolves on the carousel 34 over the chute 26. The turret 32 has a base 4 hinged at 50 which is held in the closed position by frame members 52. In the area above the chute 26 there are no frame members and, as the turret moves from the position illustrated at (a) to that illustrated in (b) the base 48 swings open to the position shown at (c) allowing seedling 54 contained therein to drop into the chute and come to rest in the plough 20 at the position shown in figure 1a, where the chute is at its most advanced position.

As the apparatus continues to be driven, the turret base 48 contacts a further frame member 56 which closes it again to receive a further seedling, and the chute is moved from the position 26 to the position 26a by the connecting rod 30. This pushes the plant 54 into the furrow formed by the plough 20 immediately before the furrow is closed by the inwardly inclined wheels 14 in a manner known per se.

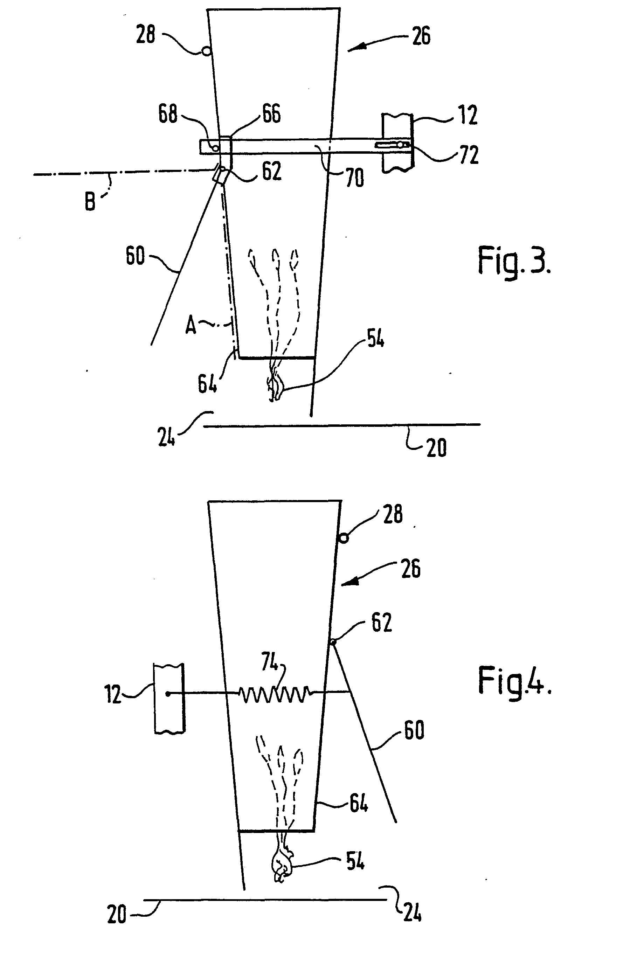

The chute 26 is provided with a lid 60 pivotally mounted thereto at 62 and, in the position indicated at 'a' in Figure 3 closing the open rearwardly directed face 64 of the chute 26. This is the position that corresponds to that illustrated at 26 in figure 1, that is with the chute at its most advanced position. It is at or close to this point that the seedling 54 is dropped into the chute from one of the turrets 32. Attached to the lid 60 about the pivot 62 is a cranked bar 66 which cooperates with a laterally directed rod 68 fixed to an actuating bar 70. The bar 70 is fixed to the frame 12 of the planter by means of a screw and slot arrangement 72 so that the position of the bar 70, and therefore the rod 68, is adjustable.

As the chute 26 reciprocates to the left as viewed in figure 3 (that is towards the position 26a in figure 1) the rod 68 bears against the bar 66 causing the lid 60 to pivot open, that is from the position shown at 'a' in figure 3 towards the position shown in 'b' in figure 3. The degree of opening can be adjusted by adjusting the actuating bar 70. The lid 60 is biased towards its closed position, that is the position illustrated at 'a', by means of a spring 74 or other resilient member also connected between the lid 60 and the frame 12. The size of the lid is such that at its fully open position ('b') it would easily clear the foliage of a plant or seedling 54 contained within the chute 26. On the other hand in the closed position ('a') the seedling 54 is supported on all sides, including the rearwardly facing side of the chute 26 and cannot therefore fall over or otherwise become disoriented before planting.

The apparatus will normally have a seat for an operative supported on the frame 12 and, conveniently located adjacent thereto, a plant-receiving tray containing a large number of seedlings to be transplanted. The operative will load the seedlings into the turrets 32 immediately after each has deposited the previous seedling and its base has returned once again to the closed position.

In an alternative form of carousel, the turrets 32 may take the form of side-opening receptacles, in some ways similar to the chute 26. Instead of there being a separate base, one side wall is hinged at or near the top of the receptacle and is spring biassed in towards the opposite, side wall. An actuating rod or lever may be attached to this side-wall and may be cammed out by suitably placed fixed cams at or near the feed station. Such an arrangement is described in our copending European application (ref: P44094). Additionally, the plough 20 may be adjustable.

The apparatus according to the invention is very reliable in operation and yet remains economical and uncomplicated as well as being versatile in operation.

**Claims**

1. A planting apparatus which comprises a frame (12) including a pair of inclined rear wheels (14) and a furrow-opening plough (20), the apparatus being adapted to be towed such that the plough opens a furrow and the wheels thereafter close it, the frame carrying a plurality of turrets (32) adapted to contain seedings (54) arranged on a rotatable carousel (34) over a chute (26) characterised in that the chute (26) is arranged for reciprocation from within the trailing portion of the plough (20) to a position close to the inclined wheels (14), and the turrets (32) are arranged to open in timed relationship with the movement of, the chute to deposit a seedling into the chute when the latter is at or close to its most advanced position.

2. An apparatus as claimed in claim 1 in which the chute (26) and turrets (32) are driven from a common gear box to ensure correct timed relationship.

3. An apparatus as claimed in either of claims 1 or 2 in which each turret (32) is arranged to open by having a hinged bottom portion (48) which is supported on one or more frame members (52) while the carousel is rotated except in the area over the chute (26) at which position the hinged bottom falls open allowing the seedling to be deposited in the chute.

4. An apparatus which as claimed in any of claims 1 to 3 in which the chute (26) has a lid (60) biassed towards a closed position when the chute is at its most advanced position and arranged to open in timed relationship with the movement of the chute so as to clear the foliage of a seedling (54) when the chute is at or close to its most rearward position at which the seedling is deposited into, the furrow.

5. An apparatus as claimed in claim 4 in which the chute (26) is enclosed on three sides and open on the fourth side facing rearwardly towards the inclined wheels (14).

6. An apparatus as claimed in either of claims 4 or 5 in which the lid (60) is preferably pivotally attached towards the upper portion of the chute (26) so as to cover the rearwardly facing open face of the chute (26) when the latter is at its most retracted position, within the trailing portion of the plough (20).

7. An apparatus as claimed in any one of claims 4 to 6 in which the lid (60) is pivoted open by means of an actuating rod (68) coming into contact with a bar (70) fixed to the frame (12) as the chute (26) reciprocates rearwardly towards its position close to the inclined wheels.

8. An apparatus as claimed in claim 7 in which the degree to which the lid (60) is open is adjustable by adjusting the position of the bar (70) on the frame.

9. An apparatus as claimed in any one of claims 1 to 8 in which the drive for the chute (26) and for the carousel (34) is independent of the wheels of the apparatus.

10. An apparatus as claimed in any one of claims 1 to 9 in which the chute (26) is replaceable by one of different configuration adapted for use with different types of seedling.

**Patentansprüche**

1. Pflanzvorrichtung, umfassend ein Gestell (12) mit einem Paar schrägstehender Hinterräder (14) und einem Pflug (20) zur Öffnung von Furchen, wobei die Vorrichtung dergestalt ziehbar ist, daß der Pflug eine Furche öffnet und die Räder sie danach wieder schließen, und das Gestell eine Vielzahl von Drehköpfen (32) trägt, die Sämlinge (54) aufnehmen und die auf einem drehbaren Karussell (34) über einem Fallschacht (26) angeordnet sind, dadurch gekennzeichnet, daß der Fallschacht (26) von einer Position innerhalb des hinteren Teils des Pfluges (20) in eine position nahe den schrägstehenden Rädern (14) hinund herbewegbar ist und die Drehköpfe (32) so angeordnet sind, daß sie sich in zeitlichem Bezug zur Bewegung des Fallschachtes öffnen, um einen Sämling in den Fallschacht abzugeben, wenn dieser sich in oder nahe seiner vorgeschobensten Position befindet.

2. Vorrichtung nach Anspruch 1, dadurch gekennzeichnet, daß der Fallschacht (26) und die Drehköpfe (32) über ein gemeinsames Getriebe angetrieben werden, so daß der richtige zeitliche Bezug gewährleistet ist.

3. Vorrichtung nach Anspruch 1 oder 2, dadurch gekennzeichnet, daß jeder Drehkopf (32) so angeordnet ist, daß er sich öffnen kann, indem er ein schwenkbares Bodenteil (48) aufweist, das während der Rotation des Karussells auf einem oder mehreren Gestellteilen (52) aufliegt, außer in dem Bereich über dem Fallschacht (26), an dem der schwenkbare Boden nach unten offenfällt und damit den Sämling in den Fallschacht abgibt.

4. Vorrichtung nach einem der Ansprüche 1 bis 3, dadurch gekennzeichnet, daß der Fallschacht (26) eine Klappe aufweist, die auf eine Schließposition vorgespannt ist, wenn der Fallschacht sich in seiner vorgeschobensten Position befindet, die jedoch so ausgestaltet ist, daß sie sich in zeitlichem Bezug zur Bewegung des Fallschachtes öffnet so daß sie das Blattwerk eines Sämlings (54) durchläßt, wenn der Fallschacht sich in oder nahe seiner hintersten position befindet, in der der Sämling in die Furche abgesetzt wird.

5. Vorrichtung nach Anspruch 4, dadurch gekennzeichnet daß der Fallschacht (26) auf drei Seiten geschlossen und auf der vierten, nach hinten zu den schrägstehenden Rädern (14) weisenden Seite geöffnet ist.

6. Vorrichtung nach Anspruch 4 oder 5, dadurch gekennzeichnet, daß die Klappe (60) vorzugsweise an dem oberen Abschnitt des Fallschachtes (26) dergestalt schwenkbar gelagert ist, daß sie die nach hinten weisende offene Seite des Fallschachtes (26) abdeckt, wenn dieser sich in seiner zurückgezogensten Position innerhalb des hinteren Teils des Pflugs (20) befindet.

7. Vorrichtung nach einem der Ansprüche 4 bis 6, dadurch gekennzeichnet, daß die Klappe (60) in ihre Öffnungsstellung geschwenkt wird mittels einer Regelstange (68), die mit einer an dem Gestell (12) befestigten Stange (70) in Berührung kommt, wenn sich der Fallschacht (26) in seine Position nahe den schrägstehenden Rädern nach hinten bewegt.

8. Vorrichtung nach Anspruch 7, dadurch gekennzeichnet, daß der Grad, bis zu dem sich die Klappe (60) öffnet, durch die Einstellung der Position der Stange (70) an dem Gestell einstellbar ist.

9. Vorrichtung nach einem der Ansprüche 1 bis 8, dadurch gekennzeichnet, daß der Antrieb für den Fallschacht (26) und für das Karussell (34) unabhängig von den Rädern der Vorrichtung ist.

10. Vorrichtung nach einem der Ansprüche 1 bis 8, dadurch gekennzeichnet, daß der Fallschacht (26) durch einen Fallschacht anderer Bauart zur Verwendung für verschiedene Arten von Sämlingen ersetzt werden kann.

**Revendications**

1. Machine à planter qui comprend un châssis (12) équipé d'une paire de roues arrière inclinées (14) et d'un soc d'ouverture de sillon (20), la machine pouvant être remorquée de sorte que le soc ouvre un sillon et que les roues le referment ensuite, le châssis portant une pluralité de trémies (32) prévues pour contenir des plants (54) et agencées sur un carrousel tournant (34) au-dessus d'une goulotte (26), caractérisé en ce que la goulotte (26) est agencée pour un mouvement alternatif, à partir d'une position à l'intérieur de la partie arrière du soc (20) jusqu'à une position proche des roues inclinées (14), et en ce que les trémies (32) sont agencées pour s'ouvrir en synchronisme avec le mouvement de la goulotte de manière à déposer un plant dans la goulotte lorsque cette dernière se trouve à sa position la plus avancée ou près de celle-ci.

2. Machine suivant la revendication 1, dans laquelle la goulotte (26) et les trémies (32) sont entraînées à partir d'un réducteur à engrenages commun, afin d'assurer un séquencement de temps correct.

3. Machine suivant l'une ou l'autre des revendications 1 et 2, dans laquelle chaque trémie (32) est prévue pour s'ouvrir, en ce qu'elle comporte un fond articulé (48) qui est supporté sur un ou plusieurs éléments de châssis (52) pendant la rotation du carrousel, sauf dans la zone située au-dessus de la goulotte (26) à l'endroit de laquelle le fond articulé bascule en position ouverte pour permettre le dépôt du plant dans la goulotte.

4. Machine suivant l'une quelconque des revendications 1 à 3, dans laquelle la goulotte (26) comporte un couvercle (60) rappelé vers une position fermée lorsque la goulotte se trouve à sa position la plus avancée et agencé pour s'ouvrir en synchronisme avec le mouvement de la goulotte de façon à libérer le feuillage d'un plant (54) lorsque la goulotte se trouve à sa position la plus en arrière ou près de cette position, à laquelle le plan est déposé dans le sillon.

5. Machine suivant la revendication 4, dans laquelle la goulotte (26) est fermée sur trois côtés et ouverte sur le quatrième côté tourné vers l'arrière, vers les roues inclinées (14).

6. Machine suivant l'une ou l'autre des revendications 4 et 5, dans laquelle le couvercle (60) est de préférence fixé de façon pivotante vers la partie supérieure de la goulotte (26), de façon à recouvrir la face ouverte tournée vers l'arrière de la goulotte (26) lorsque cette dernière se trouve à sa position la plus rétractée, à l'intérieur de la partie arrière du soc (20).

7. Machine suivant l'une quelconque des revendications 4 à 6, dans laquelle le couvercle (60) pivote en position d'ouverture au moyen d'une tige de manoeuvre (68) qui vient en contact avec une barre (70) fixée au châssis (12) lorsque la goulotte (26) se déplace vers l'arrière, vers sa position proche des roues inclinées.

8. Machine suivant la revendication 7, dans laquelle le degré d'ouverture du couvercle (60) est réglable par réglage de la position de la barre (70) sur le châssis.

9. Machine suivant l'une quelconque des revendications 1 à 8, dans laquelle l'entraînement de la goulotte (26) et du carrousel (34) est indépendant des roues de la machine.

10. Machine suivant l'une quelconque des revendications 1 à 9, dans laquelle la goulotte (26) est remplaçable par une goulotte de configuration différente permettant l'utilisation avec différents types de plants.

Fig.1b.

Fig.1a.

# Fig.2A.

# Fig.2B.

(a)          (b)          (c)

EP 0 159 193 B1

Fig.3.

Fig.4.

3